Europäisches Patentamt

**European Patent Office**

**Office européen des brevets**

(11) Publication number: **0 015 560**
A1

## EUROPEAN PATENT APPLICATION

(21) Application number: **80101147.9**

(22) Date of filing: **06.03.80**

(51) Int. Cl.³: **G 01 F 11/08, B 65 D 25/52**

(30) Priority: **07.03.79 GB 7908013**

(43) Date of publication of application: **17.09.80**
**Bulletin 80/19**

(84) Designated Contracting States: **DE FR GB IT**

(71) Applicant: **THE WELLCOME FOUNDATION LIMITED,**
**183-193 Euston Road, London NW1 2BP (GB)**

(72) Inventor: **Byng, John, 17 Carlton Rise, Welwyn Herts.**
**(GB)**
Inventor: **Cunningham, John, 3, Adamslie Crescent**
**Hayston, Kirkintilloch Glasgow Scotland (GB)**

(74) Representative: **Berg, Wilhelm, Dr. et al, Dr. Berg,**
**Dipl.-Ing. Stapf, Dipl.-Ing. Schwabe, Dr. Dr. Sandmair**
**Mauerkircherstrasse 45, D-8000 München 80 (DE)**

(54) **Integral dispenser.**

(57) A fluid dispenser comprising a resiliently deformable reservoir (1), dosing means which comprise a hollow chamber (5) integral with and above the reservoir and having an outlet (9) through which fluid may be dispensed and a tube (4) integral with the reservoir and providing communication between reservoir and dosing means, the position of the tube relative to the outlet being such that fluid cannot flow between the reservoir and hollow chamber whilst fluid is dispensed from the dosing means.

## Integral Dispenser

The present invention relates to fluid dispensers for dispensing fluids in the form of liquids or powders in measured doses. Such devices are particularly suitable for the application of liquid or powdered medicaments to animals but may equally well be used whenever unit doses of fluids are to be dispensed, for example food or drink concentrates, detergents, fluid chemicals, weed killers and substances for plant treatment such as hormones or insecticides.

For application to animals the main use is for dispensing insecticides or anthelmintics on to the back of animals such as cattle or sheep. Many medicaments are absorbed through the skin on dermal application and the ability to be able to accurately dose large numbers of animals rapidly and under varying conditions is important.

One method of dispensing such fluids is simply to pour the fluid from a reservoir such as a bottle into a separate measuring device, for example a measuring cylinder or cup of known capacity, and hence from there to the desired location. However, this method requires the availability of a separate measuring device which not only may become lost, damaged or contaminated with other fluids, dirt or the like but also introduces the possibility of spillage of expensive and/or harmful liquids at each time of dispensing thereby resulting in economic loss or harm to the operator.

Another method of dispensing fluids comprises a reservoir into which is introduced a separate dosing device through which the fluid is measured and dispensed, for example as described in our copending application No. 4931/76.

It is an object of this invention to provide a fluid dispensing device which can be used easily to both store the fluid and repeatedly provide a reasonably accurate dose of a fluid for subsequent application when required.

0015560

The present invention accordingly provides a fluid dispenser comprising a resiliently deformable reservoir, dosing means which comprise a hollow chamber integral with and above the reservoir and having an outlet through which the fluid may be dispensed and a tube integral with the resevoir and providing communication between the reservoir and dosing means, the relative positions of the outlet and the tube being such that no fluid flows between the reservoir and dosing means whilst fluid is dispensed from the dosing means.

One means of preventing the flow of liquid between reservoir and dosing means during dispensing is to position the outlet such that the tube remains above the adjacent part of the reservoir whilst the fluid is dispensed from the dosing means.

The dispensing device provides in a single unit both reservoir and dosing means and is readily operated by compression of the reservoir to fill the dosing means to the required level and then by pouring the fluid from the dosing means to the desired location. The dispenser is conveniently suitable to be transported and operated by hand.

The dispensing device described may conveniently be prepared in a single operation by conventional means for example by blow-moulding, at little additional expense to production of conventional reservoirs.

The device may be prepared from any suitable material provided that the reservoir is resiliently deformable. Plastics materials, which may be blow-moulded, are preferred, for example polythene.

The reservoir is conveniently provided with a handle by which it may be held and the handle is conveniently hollow and forms part of the reservoir. The reservoir may suitably have a capacity of up to 5 litres, for example 500 ml, 1 litre or 2 litres.

The hollow chamber which forms the dosing device may be of any suitable shape although an inverted generally conical configuration is preferred. The chamber may be of any convenient capacity and is preferably graduated to permit the dispensing of variable doses of fluid. The tube conveniently enters the chamber at the point of highest desired volume to be dispensed, thereby preventing the dispensing of excessive quantities of fluid.

The outlet is conveniently provided as a spout with a cap, which is removed whilst the device is in use, and is conveniently located at the opposite side of the chamber to the tube entry.

The reservoir may either be sealed after filling so that the only opening is in the dosing device or may be provided with a closable inlet so that the reservoir may be conveniently filled, re-filled and if necessary emptied.

The invention will now be described in more detail by reference to the drawings which show one exemplary embodiment thereof in which:-

Figure 1 is a side view of one embodiment of the invention;

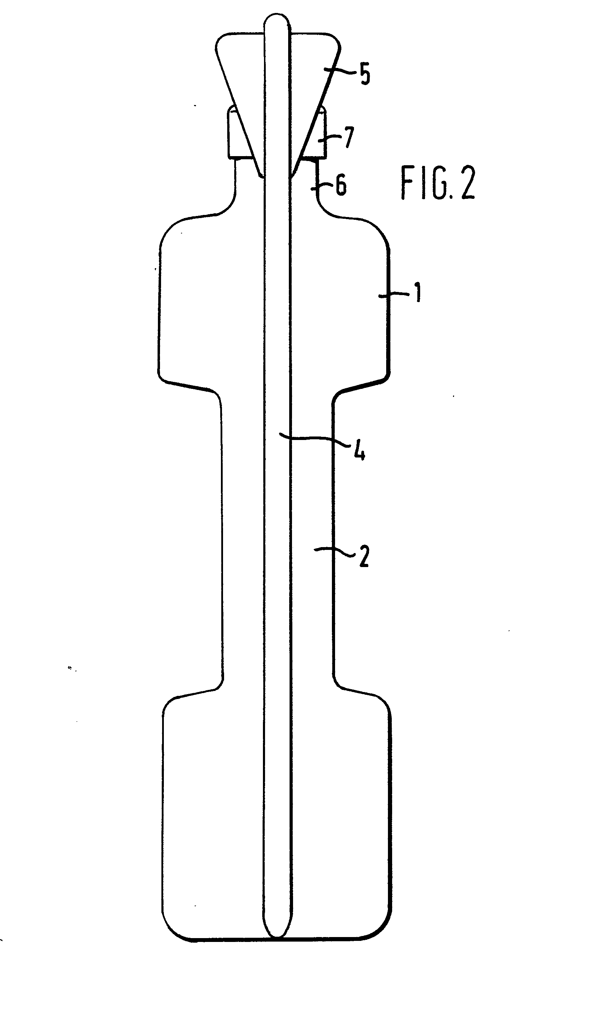

Figure 2 is one end view of the dispenser shown in Figure 1

The dispenser comprises a resiliently flexible resevoir 1 which is substantially rectangular, and has a waisted portion 2. A handle 3 forms part of the resevoir. On the outside of the resevoir but integral therewith is a tube 4 which communicates at one end with the bottom of the reservoir 1. At its upper end the tube opens into a hollow chamber 5 which is the configuration of an inverted cone and is graduated on both sides so that it may be conveniently read when held in either hand. The tube 4 provides the only communication between the reservoir 1 and chamber 5 which is integral with the reservoir. The reservoir is provided with an inlet 6, having a removable cap 7, through which the reservoir may be filled. The chamber 5 has, at its upper end at a point furthest from the tube inlet 8, an outlet 9 which may have a removable cap.

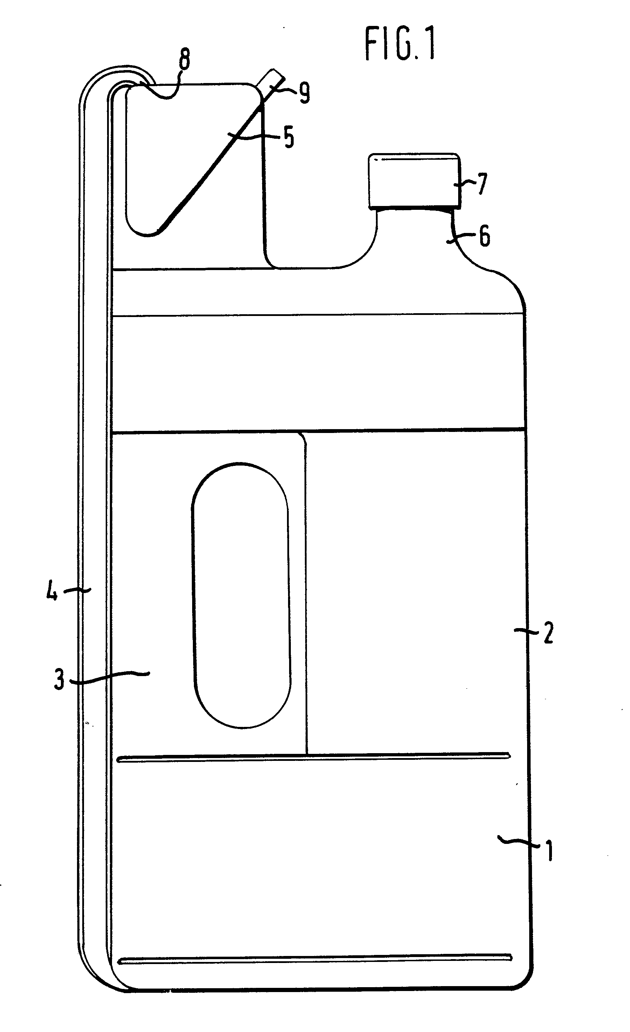

In use the resesvoir is held by the handle 3 and, with the cap on the outlet 9 removed if present, the waisted portion is squeezed thereby forcing fluid via the tube 4 into the hollow chamber 5. Pressure is maintained until the desired quantity of fluid has been transferred to the chamber 5 and is then released. Any liquid remaining in the tube 4 then falls until the level in the tube 4 is the same as in the reservoir 1. The device is then tipped (Figure 1 as shown to the right) thereby dispensing the liquid from the chamber 5 via the

0015560

outlet 9, which is of sufficient dimension to permit the liquid to pass over the inlet 6 and cap 7. During the pouring the level of liquid in the tube falls and enters the reservoir 1 and by such an arrangement only the measured dose is dispensed through the outlet 9. Once all the liquid has been dispensed from the chamber 5, the device is returned to the upright position and is ready for the next dose to be measured.

0015560

- 1 -

Claims:

1. A fluid dispenser comprising a resiliently deformable reservoir, dosing means which comprise a hollow chamber integral with and above the reservoir and having an outlet through which the fluid maybe dispensed and a tube integral with the reservoir and providing communication between the reservoir and dosing means, the position of the tube relative to the outlet means being such that fluid cannot flow between the reservoir and dosing means whilst fluid is dispensed from the dosing means.

2. A fluid dispenser as claimed in claim 1 wherein one end of the tube is located at or towards the base of the reservoir.

3. A fluid dispenser as claimed in either claim 1 or claim 2 wherein the tube is located such that it remains above the adjcent part of the reservoir whilst fluid is dispensed from the dosing means.

4 A fluid dispenser as claimed in any one of claims 1 to 3 wherein the reservoir has a capacity of up to 5 litres.

5. A fluid dispenser as claimed in claim 4 in which the reservoir has a capacity of between 500ml and 2 litres.

6. A fluid dispenser as claimed in any one of claims 1 to 5 which is of plastics material.

7. A fluid dispenser as claimed in any one of claims 1 to 6 wherein the dosing means has a capacity of up to 100ml.

8. A fluid dispenser as claimed in claim 7 where the dosing means is graduated.

9. A fluid dispenser which comprises a resiliently deformable reservoir, dosing means which comprise a hollow chamber of predetermined volume integral with and above the reservoir and provided at its upper with end an outlet through which fluid maybe dispensed and a tube integral with the reservoir and providing communication between the reservoir and dosing means, one end of the tube being located at or towards the bottom of the reservoir and the other end of the tube being located at or towards the top of the hollow chamber, the location of the outlet being such that the tube is above the adjacent part of the reservoir during dispensing of the fluid.

0015560

## FIG.1

0015560

FIG.2

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 141 574 (R.J. DONOGHUE)<br>* entire document *<br>--<br>US - A - 4 106 673 (R.J. DONOGHUE)<br>* column 3, line 1 to column 3, line 22 *<br>--<br>US - A - 4 077 547 (R.J. DONOGHUE)<br>* column 4, line 57 to column 5, line 10 *<br>-- | 1-3,<br>6,8,9<br><br>1,2,<br>6,9<br><br><br>1,2,<br>6,9 | G 01 F 11/08<br>B 65 D 25/52 |
| D | GB - A - 1 547 912 (WELLCOME FOUNDATION LTD.)<br>* entire document *<br>---- | 1 | **TECHNICAL FIELDS SEARCHED (Int.Cl.³)**<br><br>A 01 M 7/00<br>A 61 D 7/00<br>B 65 D 25/52<br>G 01 F 11/00 |

X The present search report has been drawn up for all claims

| Place of search | Date of completion of the search | Examiner |
|---|---|---|
| Berlin | 04-06-1980 | SCHOFER |

EPO Form 1503.1 06.78